# EUROPÄISCHE PATENTSCHRIFT

(11) **EP 3 333 228 B1**
(45) Veröffentlichungstag und Bekanntmachung des Hinweises auf die Patenterteilung: **06.01.2021**
(21) Anmeldenummer: 17202771.6
(22) Anmeldetag: 21.11.2017
(51) Int. Cl.: C09D 5/08

(54) **LAGERBAUTEIL UND VERFAHREN ZUR ERHÖHUNG DER WIDERSTANDSFÄHIGKEIT EINES LAGERBAUTEILS**
BEARING COMPONENT AND METHOD TO INCREASE THE RESISTANCE OF A BEARING COMPONENT
COMPOSANT DE PALIER ET PROCÉDÉ D'AUGMENTATION DE LA RÉSISTANCE D'UN COMPOSANT DE PALIER

(30) Priorität: 07.12.2016 DE 102016224402
(43) Veröffentlichungstag der Anmeldung: 13.06.2018
(73) Patentinhaber: Aktiebolaget SKF, 41 550 Göteborg (SE)
(72) Erfinder: VON SCHLEINITZ, Thilo, 97422 Schweinfurt (DE)
(74) Vertreter: Kuhstrebe, Jochen

(56) Entgegenhaltungen:
- EP-A1- 1 482 014
- WO-A1-02/44287
- WO-A2-2005/069877
- CN-A- 106 080 331
- DE-B3-102012 212 688

## Beschreibung

Die Erfindung betrifft ein Lagerbauteil und ein Verfahren zur Erhöhung der Widerstandsfähigkeit eines Lagerbauteils, insbesondere der mechanischen Widerstandsfähigkeit und des Abplatzschutzes auf nichtgestrahlten Oberflächen.

Lager sind mitunter korrosiven Umweltbedingungen ausgesetzt. Dies trifft beispielsweise für Lager zu, die in Windkraftanlagen eingebaut werden und konstruktionsbedingt oder aus Kostengründen nicht in ein Gehäuse eingebaut werden, das beispielsweise vor Wettereinflüssen schützt. Besonders problematisch ist die Situation bei Windkraftanlagen die unmittelbar an der Küste oder sogar im Meer errichtet werden. In diesem Fall können die Lager mit hochkorrosivem Salzwasser in Kontakt kommen.

Zum Schutz vor Korrosion können die Lager mit einer Beschichtung versehen werden. Als Korrosionsschutzbeschichtungen kommen in der Regel Lacke auf Epoxidharz-Basis zum Einsatz. Um einen zuverlässigen Korrosionsschutz zu gewährleisten ist es erforderlich, dass die Beschichtung fest am Untergrund haftet. Hierfür ist in der Regel eine Vorbereitung des Untergrunds Voraussetzung. Eine bekannte Maßnahme zur Erzielung einer guten Haftung einer Beschichtung besteht darin, die zu beschichtende Oberfläche aufzurauen. Das Aufrauen erfolgt in vielen Fällen durch eine Strahlbehandlung der zu beschichtenden Oberfläche. Hierzu werden abrasive Partikel gegen die zu beschichtende Oberfläche geschleudert. Eine Strahlbehandlung eines Lagerbauteils birgt allerdings das Risiko, dass verbleibende abrasive Partikel das Lager im Betrieb schädigen bzw. ist mit einem sehr hohen Aufwand für eine möglichst vollständige Entfernung der abrasiven Partikel vom Lagerbauteil verbunden.

Die Korrosion von freiliegenden Außenflächen beispielsweise an Hauptrotorlagern von Windkraftanlagen stellt üblicherweise kein funktionskritisches Problem dar, ist jedoch in der Regel unerwünscht, so dass Gegenmaßnahmen zu treffen sind. Die funktionswesentlichen Wälz- und Gleitflächen im Lagerinnenraum sind abgedichtet und mit Fettfüllung geschützt. Die Dichtungslauffläche bildet einen Fettfilm oder sogar Fettwulst aus, welcher auch die der Dichtungslauffläche benachbarten Bereiche schützt. Unter Berücksichtigung der Korrosionswerte von ungeschütztem Stahl selbst in maritimer Umgebung, beispielsweise 10 mm in 100 Jahren bei einseitig salzwasserkontaktierten Stahlwasserbauten, wird deutlich, dass ein Funktionsproblem des Hauptrotorlagers durch Außenflächenkorrosion kaum zu erwarten ist.

Bei üblichen Korrosionsschutzmaßnahmen an solchen Hauptrotorlager-Außenflächen werden diese gestrahlt, z.B. Korund gestrahlt, und dann entweder durch thermisches Zinkspritzen, also Zinkflammspritzen oder Zinkplasmaspritzen oder durch die erwähnten Lackiermaßnahmen, beschichtet. Bei allen hier üblichen Korrosionsschutzmaßnahmen wird die Oberfläche grundsätzlich immer gestrahlt, üblicherweise auf Sa 2,5. Beim Strahlen werden harte Partikel ähnlich Schleifscheiben- oder Sandkörnern verwendet. Auch beim Zinkspritzen entstehen nicht an die Oberfläche gebundene Metallpartikel. Es ist äußerst schwierig wenn nicht unmöglich, ein Bauteil wie ein Hauptrotorlager oder einen Hauptrotorlagerring nach einem solchen Prozess vollständig partikelfrei zu bekommen. Selbst ein Abdecken der Funktionsflächen führt bei Entfernen der Abdeckungen zu Rückverschmutzung, da überall lose Partikel anlagern. Das Abreinigen großer ringförmiger Bauteile führt aufgrund ihrer Form und der damit verbundenen stetigen Schmutzrekontamination zu Reinigungsergebnisse ähnlich einer Verdünnungsreihe, wo der Wert Null schwer erreichbar ist.

Es ist daher von statistischer Wahrscheinlichkeit, in solcherart behandelten Lagern auch nach möglichst sorgfältiger Reinigung einige Abrasivstoffpartikel zu finden.
Es ist mathematisch nachweisbar, dass schon geringe Mengen solcher Partikel im Betrieb des Lagers Oberflächenschäden induzieren und zu einer signifikanten Reduzierung der Lagerlebensdauer führen können.

Vorrangiges Ziel aller technischen Maßnahmen an Windkraftlagern ist es, eine möglichst hohe Nutzungsdauer zu erzielen. Es ist daher nicht schlüssig, mit Maßnahmen zum kaum nutzungsdauererhöhenden äußeren Korrosionsschutz das erhebliche Risiko einzugehen, die Nutzungsdauer und Performance aufgrund eingebrachter innerer Verschmutzungen signifikant zu verringern und die Zuverlässigkeit der Anlage zu reduzieren.

Aus der WO 2005/069877 A2 sind Verfahren zum Aufbringen von Schichten auf eisenhaltige Substrate, insbesondere auf Automobil-Karosserieteile, bekannt. Die EP 1 482 014 A1 offenbart ein Beschichtungsverfahren zur Verbesserung der Designeigenschaften von beispielsweise Automobilteilen und derart beschichtete Artikel. Die WO 02/44287 A1 offenbart mehrlagige Beschichtungen beispielsweise für Schiffsrümpfe oder Pipelines. Die CN 106 080 331 A offenbart einen Schichtaufbau eines Teppichs eines Automobils.

Aus der DE 10 2012 212 688 B3 ist ein Verfahren zum Schutz eines Lagerbauteils vor Korrosion bekannt, wobei auf einen Oberflächenbereich des Lagerbauteils ohne vorheriges Strahlen nacheinander mehreren Grundschichten eines ersten Lacks auf Polyurethan-Basis, dem Zink zugesetzt ist, aufgetragen werden und auf die zuletzt aufgetragene Grundschicht eine Deckschicht eines zweiten Lacks auf Polyurethan-Basis, dem Eisenglimmer zugesetzt ist, aufgetragen wird. Mit diesem Verfahren kann mit vergleichsweise geringem Aufwand und auf zuverlässige Weise ein sehr wirksamer Korrosionsschutz erzielt werden. Die Anzahl der Schichten und die Dicke eines solchen Lacksystems hängen vom geforderten Schutz ab, der bis C5MH reichen kann. Bei sehr dicken Schichten kann es dann durch innere Spannungen und erhöhte Verformbarkeit der Schicht unter Last zu Haftverlust am geschliffenen nichtgestrahlten Untergrund kommen. Das auf diese Weise ausgebildete Schichtensystem ist bei hoher Schichtdicke nicht mehr für extreme mechanische Einwirkungen ausgelegt, so dass es bei sehr starken mechanischen Einwirkungen auf das Schichtsystem zu Abplatzungen kommen kann.

Der Erfindung liegt daher die Aufgabe zugrunde, einen wirksamen und wirtschaftlichen Korrosionsschutz für die Außenflächen eines Lagerbauteils zu finden, der kein Verschmutzungspotential in Vorbehandlung und Auftrag besitzt und somit keinerlei Risiko für die tatsächliche Nutzungsdauer und Performance des laufenden Lagers darstellt und zudem mechanischen Einwirkungen auch bei hoher Schichtdicke standhält. Dabei wird eine Schichtdicke von ca. 250 bis 400 µm als eine hohe Schichtdicke angesehen.

Diese Aufgabe wird durch die Merkmalskombinationen der nebengeordneten Ansprüche gelöst.

Das erfindungsgemäße Lagerbauteil weist einen Oberflächenbereich auf, auf den übereinander eine Grundschicht eines ersten Lacks auf Polyurethan-Basis, dem Zink zugesetzt ist, eine von der Grundschicht verschiedene Zwischenschicht eines zweiten Lacks auf Polyurethan-Basis, dem Fasern zugesetzt sind und eine von der Zwischenschicht verschiedene Deckschicht eines dritten Lacks auf Polyurethan-Basis aufgebracht sind.

Die Erfindung hat den Vorteil, dass mit vergleichsweise geringem Aufwand und auf zuverlässige Weise ein sehr wirksamer Korrosionsschutz eines Lagerbauteils erzielt werden kann, der auch starken mechanischen Einwirkungen standhält.

Der erste Lack weist auch auf einem nicht aufgerauten Untergrund, insbesondere einem feingeschliffenen Wälzlagerstahl, eine so hohe Haftfestigkeit auf, dass keine aufwendige und für das Lagerbauteil gefährliche Oberflächenvorbereitung, insbesondere kein Strahlen der Oberfläche des Lagerbauteils erforderlich ist. Somit ist es möglich, dass der Oberflächenbereich nicht gestrahlt ist. Zusätzlich zu dem Vorteil einer Prozessvereinfachung entfällt dadurch das Risiko, dass Abrasivstoffrückstände aus dem Strahlprozess das Lagerbauteil im Betrieb schädigen.

Auf den Oberflächenbereich können mehrere Grundschichten aufgebracht sein. Auf den Oberflächenbereich können 1 bis Grundschichten aufgebracht sein. Die Schichtdicke jeder Grundschicht kann jeweils 30 µm bis 90 µm, vorzugsweise 40 µm bis 60 µm, betragen.

Die Schichtdicke der faserhaltigen Zwischenschicht kann 40 bis 100 µm, vorzugsweise 70 µm, betragen.

Die Schichtdicke der Deckschicht kann 40 µm bis 100 µm, vorzugsweise 50 µm bis 70 µm, betragen. Es können 1 bis 3 Deckschichten vorgesehen sein.

Die Fasern können als Kurzfasern mit einer Länge von ca. 100 bis 400 µm oder als Langfasern mit einer Länge von ca. 3 mm ausgebildet sein. Da Langfasern schlecht verarbeitbar sind und zum Knäueln neigen werden Kurzfasern bevorzugt. Insbesondere kommen Kurzfasern mit einer Länge von 100 bis 300µm, vorzugsweise von 100 bis 200 µm zum Einsatz. Derartig kurze Fasern lassen sich gut verarbeiten und ergeben einen wirksamen Schutz vor mechanischen Einwirkungen. Insbesondere bewirken derartige Fasern eine Armierung der Zwischenschicht, so dass es auch bei lokalen Haftungsproblemen durch starken Schichtzusammenhalt nicht zu Abplatzungen kommt.

Der Faseranteil in der Zwischenschicht kann bei Verwendung von Kurzfasern 15 bis 35 %, vorzugsweise 25 %, betragen. Die prozentualen Angaben für den Faseranteil sind dabei jeweils auf das Volumen bezogen. Soweit jeweils nichts anderes angegeben ist, gilt dies auch für alle weiteren prozentualen Angaben. Bei Verwendung von Langfasern kann der Faseranteil deutlich geringer sein, beispielsweise 3 bis 15 %. Oberhalb der genannten maximalen Faseranteile ist eine auseichende Einbettung der Fasern in den zweiten Lack nicht mehr gewährleistet oder bei Langfasern eine Verknäuelung und bei Kurzfasern eine Agglomeration möglich. Außerdem ist zu wenig Bindemittel für eine ausreichende Haftung möglich. Unterhalb der genannten minimalen Faseranteile ist eine ausreichende Armierungswirkung der Fasern nicht mehr gewährleistet.

Die Fasern können als Glasfasern, Kohlefasern oder Aramidfasern ausgebildet sein.

Die Fasern können eine haftmittelhaltige Schlichte aufweisen. Dies ermöglicht eine sehr feste Anhaftung des zweiten Lacks an den Fasern. Insbesondere können die Fasern eine Silan-Schlichte aufweisen. Gut geeignet ist auch eine Polyurethan-Schlichte. Epoxid-Schlichte ist in Polyurethan-Lacksystemen hingegen ungeeignet.

Der Schlichteanteil kann weniger als 3 % betragen. Insbesondere kann der Schlichteanteil 1 bis 1,5 % betragen.

Beispielsweise können Karbonfasern mit Polyurethan-Schlichte oder schlichtefrei eingesetzt werden, die eine Länge von ca. 100 µm aufweisen. Ebenso können Glasfasern mit Silan-Schlichte eingesetzt werden, die eine Länge von ca. 200 µm aufweisen. Die Faserdicke beträgt in der Regel weniger als 10 µm. Beispielsweise eignen sich Karbonfasern, die eine Dicke von ca. 7 µm aufweisen.

Der dritte Lack kann eine diffusionshemmende Beimischung aufweisen. Dadurch kann beispielsweise ein unerwünschtes Eindringen von Feuchtigkeit in die Deckschicht reduziert werden. Insbesondere können dem dritten Lack Eisenglimmer oder Kalziumplumbat zugesetzt sein. Vor allem bei der Verwendung von feuchteleitfähigen Fasern kommt der Diffusionsbarriere der Deckschicht große Bedeutung zu.

Der erste Lack und der zweite Lack können hinsichtlich ihrer Polyurethan-Basis identisch ausgebildet sein. Dies reduziert das Risiko von Problemen aufgrund von Unverträglichkeiten zwischen dem ersten Lack und dem zweiten Lack.

Bei dem ersten Lack und/oder dem zweiten Lack und/oder dem dritten Lack kann es sich um einen Einkomponenten-Lack handeln. Dieser lässt sich mit sehr wenig Aufwand und ohne Mischfehlerrisiko verarbeiten. Es ist aber auch möglich, den ersten Lack und/oder den zweiten Lack als einen Zweikomponenten-Lack auszubilden.

Der erste Lack und/oder der zweite Lack und/oder der dritte Lack kann feuchtigkeitshärtend ausgebildet sein. Dies hat den Vorteil, dass das Fortschreiten des Härteprozesses bei bekannter Luftfeuchtigkeit sehr leicht abgeschätzt werden kann, dass die Verarbeitung einfach ist und dass kein Härter abgewogen und eingemischt werden muss.

Sämtliche Lacke können die gleiche Grundrezeptur ausweisen, der unterschiedliche Feststoffe zugesetzt sind. Eine geeignete Grundrezeptur ist beispielsweise in der DE 10 2012 212 688 B3 offenbart.

Das Lagerbauteil kann so ausgebildet sein, dass wenigstens der überwiegende Teil des beschichteten Oberflächenbereichs nach betriebsfertiger Montage des Lagerbauteils nicht an einer Gegenfläche zur Anlage kommt.

Das Lagerbauteil kann als ein Lagerring, insbesondere als ein Innenring oder ein Außenring, insbesondere eines Wälzlagers oder eines Gleitlagers, ausgebildet sein.

Die Erfindung bezieht sich weiterhin auf ein Lager mit einem erfindungsgemäßen Lagerbauteil. Das Lager kann als ein Großlager ausgebildet sein. Insbesondere kann das Lager als eine Komponente einer Windkraftanlage ausgebildet sein.

Außerdem bezieht sich die Erfindung auf ein Verfahren zum Verfahren zur Erhöhung der Widerstandsfähigkeit eines Lagerbauteils. Beim erfindungsgemäßen Verfahren werden auf einen Oberflächenbereich des Lagerbauteils übereinander wenigstens eine Grundschicht eines ersten Lacks auf Polyurethan-Basis, dem Zink zugesetzt ist, eine von der Grundschicht verschiedene Zwischenschicht eines zweiten Lacks auf Polyurethan-Basis, dem Fasern zugesetzt sind und eine von der Zwischenschicht verschiedene Deckschicht eines dritten Lacks auf Polyurethan-Basis aufgetragen. Dem dritten Lack können plättchenförmige Basissegmente zugesetzt sein. Der Oberflächenbereich kann nichtgestrahlt sein.

Die Erfindung wird nachstehend anhand des in der Zeichnung dargestellten Ausführungsbeispiels erläutert.

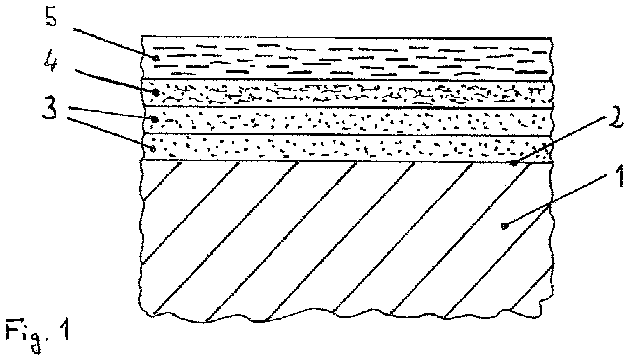

Figur 1 zeigt eine schematische Darstellung eines Ausführungsbeispiels eines beschichteten Lagerbauteils 1. Die Darstellung ist stark vereinfacht und nicht maßstäblich und zeigt lediglich einen Ausschnitt des Lagerbauteils 1. Bei dem Lagerbauteil 1 kann es sich beispielsweise um einen Lagerring eines Wälz- oder Gleitlagers usw. handeln. Insbesondere ist das Lagerbauteil 1 als Komponente eines Großlagers einer Windkraftanlage oder einer anderen großen Maschine ausgebildet. Das Lagerbauteil 1 kann aus Stahl hergestellt sein.

Auf einen Oberflächenbereich 2 des Lagerbauteils 1 sind übereinander zwei Grundschichten 3, eine Zwischenschicht 4 und eine Deckschicht 5 aufgebracht. Dadurch wird das Lagerbauteil 1 innerhalb des Oberflächenbereichs 2 vor Korrosion geschützt. Der Oberflächenbereich 2 kann sich über die gesamte Oberfläche des Lagerbauteils 1 ausgenommen der Lauf- und Gleitbahnen oder lediglich über einen Teilbereich der Oberfläche des Lagerbauteils 1 erstrecken. Wie noch im Einzelnen erläutert wird, erfolgt vor der Beschichtung des Lagerbauteils 1 kein Strahlen des Oberflächenbereichs 2 mit abrasiven Partikeln, sondern die unterste Grundschicht 3 ist direkt auf den in der Regel geschliffenen und entfetteten Oberflächenbereich 2 des Lagerbauteils 1 aufgebracht.

Bei einem Ausführungsbeispiel weisen die Grundschichten 3 jeweils eine Dicke von 50 µm auf und bestehen aus einem feuchtigkeitshärtenden Einkomponenten-Lack auf Polyurethanbasis, dem Zinkpartikel zugesetzt sind. Soweit nichts anderes vermerkt ist beziehen sich Angaben zur Dicke jeweils auf die gehärtete und trockene Schicht. Ein Epoxidharz-Lack weist unter den genannten Bedingungen keine ausreichende Haftfestigkeit auf und benötigt einen gestrahlten Untergrund. Prinzipiell sind bei den Grundschichten 3 Schichtdicken von ca. 30 µm bis ca. 90 µm möglich. Der bevorzugte Bereich liegt zwischen 40 µm und 60 µm. Wird die Schichtdicke zu gering gewählt, besteht kein ausreichender Korrosionsschutz. Statt der dargestellten zwei Grundschichten 3 kann auch lediglich eine einzige Grundschicht 3 vorgesehen sein oder es können drei oder mehr Grundschichten 3 vorgesehen sein. Prinzipiell ist es auch möglich, für die Grundschichten 3 einen Zweikomponenten-Lack auf Polyurethanbasis zu verwenden, wobei wiederum Zink-Partikel zugesetzt sind. Der Anteil der Zink-Partikel in den getrockneten Grundschichten 3 beträgt ca. 60 % bis 90 %. Wie bei allen weiteren Angaben bzgl. prozentualer Anteile von Stoffen beziehen sich diese Werte jeweils auf das Volumen, d. h. bei den %-Angaben handelt es ist jeweils um Vol%. Die direkt auf den Oberflächenbereich 2 aufgebrachte Grundschicht 3 kann als weiteren Inhaltsstoff Bitumen oder Asphalt enthalten, um die Elastizität der Grundschicht 3 zu erhöhen.

Die faserhaltige Zwischenschicht 4 kann eine Dicke von 40 bis 100 µm, beispielsweise 80 µm, aufweisen und aus einem feuchtigkeitshärtenden Einkomponenten-Lack auf Polyurethanbasis bestehen, dem Fasern zugesetzt sind. Die Fasern dienen der Verstärkung der Zwischenschicht 4 und bilden eine Armierung aus. Durch diese Armierung können Bereiche überbrückt werden, in denen die Haftung zum Untergrund weniger stark ausgebildet ist, so dass ein Abblättern von schlecht haftenden Teilbereichen verhindert wird. Außerdem wird durch die Armierung die mechanische Stabilität der Zwischenschicht 4 erhöht.

Bei den Fasern kann es sich insbesondere um Kurzschnittfasern handeln, die beispielsweise eine Faserlänge von 100 bis 400 µm, typisch 200 µm, aufweisen. Durch die Verwendung von Kurzschnittfasern wird das Risiko eines Verknäuelns der Fasern im Vergleich zur Verwendung von Langfasern deutlich reduziert. Bei allen Lackiervorgängen mit einem faserhaltigen Lack erfolgt der Auftrag vorzugsweise durch Spritzen. Bei einem Auftrag mit einem Pinsel kann es zu einer inhomogenen Verteilung und zu einem Entmischen der Fasern kommen. Beim Auftrag mit einer Farbrolle besteht insbesondere das Risiko, dass sich nachteilige Agglomerate ausbilden.

Es können dem Lack ca. 15 bis 35 %, insbesondere 25 %, Kurzfasern zugesetzt werden. Diese Angaben beziehen sich jeweils auf das Volumen und auf den trockenen Lack. Bei den Fasern kann es sich um elektrisch leitfähige oder elektrisch isolierende Fasern handeln. Es eignen sich beispielsweise Glasfasern, Aramidfasern oder Kohlenstofffasern.

Aramidfasern können bis zu 7% Feuchtigkeit aufnehmen. Bei einer Verarbeitung im trockenen Zustand führt das dazu, dass zunächst die Topfzeit erhöht wird, es dann aber zu einer schnellen Durchhärtung des Lacks kommt. Dies kann durch eine Ummantelung der Aramidfasern abgemildert werden.

Als Glasfasern können insbesondere chemisch beständige C-Glas-Fasern mit haftvermittelnder Schlichte zum Einsatz kommen. Beispielsweise können Glasfasern mit einer Silan-Schlichte verwendet werden.

Die Deckschicht 5 weist eine Dicke von ca. 40 µm bis ca. 100 µm, vorzugsweise 50 µm bis 70 µm, auf. Typischerweise beträgt die Dicke der Deckschicht 5 ca. 60µm und entspricht somit ungefähr der Dicke jeder der Grundschichten 3. In der Tendenz wird die Dicke der Deckschicht 5 aber aufgrund der Plättchenpigmente wie z. B. Eisenglimmer eher etwas dicker gewählt als die Dicken der Grundschichten 3. Die Deckschicht 5 besteht aus einem feuchtigkeitshärtenden Einkomponenten-Lack auf Polyurethanbasis, dem anstelle von Zink Eisenglimmer-Partikel in Plättchenform zugesetzt sind. Analog zu den Grundschichten 3 kann auch für die Deckschicht 5 ein Zweikomponenten-Lack auf Polyurethan-basis verwendet werden.

Die in Figur 1 dargestellte Schichtenfolge stellt einen sehr wirksamen Korrosionsschutz dar. Es lässt sich damit die Stufe C4/10Jahre bis C5/10Jahre nach EN ISO 12944-2:2000 erreichen. Durch den Einsatz mehrerer dünner Grundschichten 3 wird im Vergleich zur Verwendung einer einzigen dicken Grundschicht 3 die Durchtrocknung beim Aufbringen der Grundschichten 3 verbessert. Außerdem wird die Porendurchgängigkeit verringert und es werden die inneren Spannungen, die im Extremfall zu einer Schichtablösung führen können, reduziert. Dies beruht insbesondere darauf, dass beim Trocknen der Grundschichten 3 entstehendes Kohlendioxid und Lösemittel aus einer dünnen Grundschicht 3 besser entweichen kann als aus einer dicken Grundschicht 3. Bei Verwendung eines Einkomponenten-Lacks auf Polyurethanbasis kann zudem Wasserdampf für die Vernetzung leichter eindiffundieren. Das in den Grundschichten 3 enthaltene Zink schützt den Stahl des Lagerbauteils 1 vor Korrosion.

Die Zwischenschicht 4 ist wegen ihres Faseranteils mechanisch sehr stabil und verhindert ein Abplatzen von Teilbereichen. Spritzt man eine solche faserhaltige Zwischenschicht 4, die 25 % Faserbewehrung mit 200 µm langen Glasfasern (1 % Silan-Schlichte) aufweist, zu Prüfzwecken direkt auf geschliffenen Stahl, wobei eine Schichtdicke im trockenen Zustand von 80 µm ausgebildet wird, so werden folgende Eigenschaften erzielt: Nach einer Konditionierung von 7 Tagen bei 23 °C und 50 % relative Luftfeuchtigkeit ergeben sich beim Gitterschnitt gemäß DIN EN ISO 2409 der Bestwert "0" und beim Haftabzug gemäß DIN EN ISO 4624 Werte bis ca. 9,5 N/mm². Die Werte für den Haftabzug liegen damit etwa doppelt so hoch wie gängige Werte von Schichten auf Epoxid-Basis auf gestrahltem Stahl und ein Vielfaches über gängigen Werten von Schichten auf Epoxid-Basis auf geschliffenem Stahl.

Die Deckschicht 5 schützt die Zwischenschicht 4 und die Grundschichten 3 aufgrund der vergleichsweise hohen Härte des darin enthaltenen Eisenglimmers vor mechanischen Einwirkungen. Dabei bilden die Eisenglimmer-Plättchen eine Art Schutzpanzer. Außerdem wird durch die plättchenartige Form des Eisenglimmers eine hohe Diffusionsdichtigkeit erreicht, so dass kaum Wasserdampf bis zur Zwischenschicht 4 und zu den Grundschichten 3 und insbesondere zu den darin enthaltenen Zink-Partikeln vordringen kann. Außerdem ergeben sich bei einer Kombination von Zink-Partikeln und Eisenglimmer günstige Verhältnisse im Hinblick auf die elektrochemische Spannungsreihe, da das System dann insgesamt eine geringe Anzahl von Metallen enthält.

Wenn die Grundschichten 3, die Zwischenschicht 4 und die Deckschicht 5 auf derselben Polyurethan-Basis beruhen, können Versprödungen, die durch Diffusion von Lackbestandteilen in die Nachbarschicht entstehen können und Spannungen, die zu einem Anheben und Abplatzen von Schichten führen können, besonders zuverlässig vermieden werden.

Alternativ zu dem in Figur 1 dargestellten Ausführungsbeispiel kann das Lagerbauteil 1 auch mit lediglich zwei Grundschichten 3, einer Zwischenschicht 4 und einer Deckschicht 5 beschichtet werden. Die sonstigen Parameter können für das System mit zwei Grundschichten 3 beibehalten werden.

Zur Ausbildung der in Figur 1 dargestellten und ähnlichen Schichtabfolgen kann folgendermaßen vorgegangen werden:
Das Lagerbauteil 1, dessen Oberfläche in der Regel geschliffen ist, wird gereinigt und dadurch im Oberflächenbereich 2, in dem die Beschichtung erfolgen soll aktiviert. Dies kann beispielsweise durch eine Behandlung zunächst mit Spiritus und dann mit Aceton erfolgen. Insbesondere sollte eine Aktivierung auf über 72 mN/m Oberflächenenergie erfolgen. Weder vor noch nach der Aktivierung wird das Lagerbauteil 1 mit abrasiven Partikeln gestrahlt und dadurch aufgeraut. Anders als beispielsweise Silikate haftet Polyurethan bei erhöhtem Binderanteil auch auf nicht gestrahlten Stahloberflächen sehr gut, falls die Schichtdicke geeignet gewählt wird.

Auf den aktivierten Oberflächenbereich 2 wird beispielsweise mittels einer Farbrolle oder einer Spritzpistole die erste Grundschicht 3 aufgetragen. Hierzu werden dem Lack auf Polyurethan-Basis zuvor Zink-Partikel zugemischt. Die innere elektrische Kontaktierung im Lack und damit der Korrosionsschutz kann verbessert werden, wenn nicht nur Zinkpulver verwendet wird, sondern auch ein Anteil Zinklamellen. In einer Mischung aus Zinkpulver und Zinklamellen erhält man die optimale Packungsdichte bei mehr Berührflächen untereinander.

Für verschiedene Soll-Schichtdicken der Grundschicht 3 wird die gleiche Grund-Rezeptur mit verschiedenen Zink-Pulverkörnungen verwendet. Die unterschiedliche Schichtdicke wird über die Körnung der verwendeten Pulver und gleichzeitig über die Viskosität des Polyurethan-Binders eingestellt. Eine höhere Lösemittelzugabe (VOC) senkt die Viskosität und macht die Schicht dünner - und umgekehrt. Die Viskosität des Lacks kann außerdem über den Vorvernetzungsgrad des Polyurethans und über die Rheologie beeinflusst werden. Eine geringere Vorvernetzung entspricht einer geringeren Viskosität.

Der fertig gemischte Lack für die Grundschicht 3 enthält einen Lösemittelanteil (z. B. Naphtha) von 20 % bis 40 %, insbesondere 30 %.

Nach Abzug des Lösemittelanteils setzt sich der verbleibende Trockenanteil des Lacks folgendermaßen zusammen, wobei als Bezugsgröße für die Prozentzahlen der gesamte Trockenanteil zugrunde gelegt wird:
- 20-40 %, insbesondere 30 %, einkomponentiges feuchtigkeitshärtendes Polyurethan (Basis aromatisches Polyisocyanat),
- 50-80 % Feststoffanteil,
- bis zu 10 % Additive (fest oder flüssig).

Bei einer derartigen Zusammensetzung ist der Lack leicht und gleichmäßig auftragbar, schnell trocknend, hochhaftfest und chemisch wie auch mechanisch stabil.

Bei einem Polyurethananteil von weniger als 20 % treten Probleme bzgl. der Haftung des Lacks an der Oberfläche des Lagerbauteils 1 auf; oberhalb 40 % ist die Korrosionsschutzwirkung des Lacks nicht mehr gewährleistet, da nicht mehr von einer durchgehenden elektrischen Verbindung über das gesamte Volumen der Lackschicht ausgegangen werden kann.

Das Aushärten des Lacks erfolgt über eine Vernetzung von funktionalen Enden (Isocyanat) des Polyurethan-Systems. Das Volumen der getrockneten Schicht beträgt ungefähr 70 % des Volumens der nassen Schicht.

Nach einem ausreichenden Ablüften, während dem ein großer Teil des bei der Trocknungsreaktion gebildeten Kohlendioxids aus der ersten Grundschicht 3 entweicht, und für das abhängig von der Temperatur und Luftfeuchtigkeit ca. drei bis acht Stunden zu veranschlagen sind, wird auf die erste Grundschicht 3 eine zweite Grundschicht 3 aufgetragen. Dabei wird in identischer Weise vorgegangen wie bei der ersten Grundschicht 3 und es wird ein Lack verwendet, der hinsichtlich seiner Polyurethan-Basis und hinsichtlich des zugesetzten Zinks identisch zum Lack der ersten Grundschicht 3 ausgebildet ist, so dass eine in Hinsicht auf die Haft- und Korrosionsschutzeigenschaften identische Lackzusammensetzung vorliegt. Um eine bessere Kontrolle des Lackauftrags zu ermöglichen, können dem Lack für die zweite Grundschicht 3 andere Farbpigmente zugesetzt sein als dem Lack für die erste Grundschicht 3. Für die Ausbildung der zweiten Grundschicht 3 entfällt die Aktivierung des Oberflächenbereichs 2 des Lagerbauteils 1 als Vorbereitungsmaßnahme, da dieser durch die erste Grundschicht 3 abgedeckt ist.

Nach einem Ablüften der zweiten Grundschicht 3 wird in analoger Weise eine dritte Grundschicht 3 aufgetragen, wobei für die Lackzusammensetzung das für die erste und zweite Grundschicht 3 Gesagte analog gilt. Insbesondere besteht die Möglichkeit, dass der Lack für die dritte Grundschicht 3 vollkommen identisch zum Lack für die erste Grundschicht 3 ausgebildet ist. Durch die zweite Grundschicht 3 sind die in der ersten Grundschicht 3 verbliebenen durchgehenden Poren weitgehend geschlossen. Eine nochmalige Reduzierung der durchgehenden Poren erfolgt durch die dritte Grundschicht 3

Dann wird die Zwischenschicht 4 auf die oberste Grundschicht 3 aufgetragen. Auch hier wird zunächst abgewartet, bis die dritte Grundschicht 3 ausreichend abgelüftet ist. Dem für die Ausbildung der Zwischenschicht 4 vorgesehen Lack werden anstelle von Zink Fasern zugemischt. Die Fasern können dem Lack vor dessen Verarbeitung mit Hilfe einer Dissolverscheibe zugesetzt werden. Dabei kann für die Zwischenschicht 4 als Ausgangsstoff der identische Lack - jedoch ohne Zink - wie bei der Herstellung der Grundschichten 3 verwendet werden, d. h. die Lacke können hinsichtlich ihrer Polyurethan-Basis identisch ausgebildet sein. Dies garantiert eine gute Verträglichkeit der Zwischenschicht 4 mit den Grundschichten 3 und vermeidet unerwünschte Reaktionen, die zu einer Schädigung der Zwischenschicht 4 oder der Grundschichten 3 führen könnten. Die Zwischenschicht 4 wird mit einer Spritzpistole aufgetragen. In analoger Weise wie für die Grundschichten 3 beschrieben wird bei der Ausbildung der Zwischenschicht 4 über die Einstellung der Viskosität oder anderer Parameter oder über die Auswahl und Menge der zugesetzten Fasern die gewünschte Schichtdicke im getrockneten Zustand ausgebildet.

Als nächstes wird die Deckschicht 5 auf die Zwischenschicht 4 aufgetragen. Auch hier wird zunächst abgewartet, bis die Zwischenschicht 4 ausreichend abgelüftet ist. Dem für die Ausbildung der Deckschicht 5 vorgesehen Lack wird Eisenglimmer zugemischt. Dabei kann für die Deckschicht 5 als Ausgangsstoff der identische Lack - jedoch ohne Zink - wie bei der Herstellung der Grundschichten 3 und der Zwischenschicht 4 verwendet werden, d. h. die Lacke können hinsichtlich ihrer Polyurethan-Basis identisch ausgebildet sein. Dies garantiert eine gute Verträglichkeit der Deckschicht 5 mit der Zwischenschicht 4 und vermeidet unerwünschte Reaktionen, die zu einer Schädigung der Deckschicht 5 oder der Zwischenschicht 4 führen könnten. Die Deckschicht 5 kann beispielsweise mit einer Farbrolle oder einer Spritzpistole aufgetragen werden. In analoger Weise wie für die Grundschichten 3 und die Zwischenschicht 4 beschrieben wird bei der Ausbildung der Deckschicht 5 über die Einstellung der Viskosität oder anderer Parameter oder über die Auswahl der Plättchengröße und Menge des zugesetzten Eisenglimmers die gewünschte Schichtdicke im getrockneten Zustand ausgebildet.

Nach dem Aushärten der Deckschicht 5, der Zwischenschicht 4 und der Grundschichten 3 schützen diese das Lagerbauteil 1 sehr wirksam und über einen langen Zeitraum vor Korrosion. Dabei übernimmt die Grundschicht 3 die Aufgabe der Substrathaftung und bietet durch den Zusatzstoff Zink einen sehr guten Korrosionsschutz. Die Deckschicht 5 übernimmt die Aufgabe der Diffusionsbarriere und bietet mit Eisenglimmer eine mechanisch wirksame Panzerung. Die faserverstärkte Zwischenschicht 4 führt zu einem hochfesten Verbund in Oberflächenrichtung, der Rissen senkrecht zur Oberfläche vorbeugt, die durch äußere mechanische Belastungen entstehen könnten. Dadurch wird einem Abblättern, Verschieben oder Abschälen des Lacksystems entgegengewirkt. Insbesondere bei ansatzlos voll umschließenden Lackierungen, d. h. rund um ein gesamtes Bauteil, ergibt sich eine hervorragende Schichtstabilisierung.

### Bezugszeichen

- 1: Lagerbauteil
- 2: Oberflächenbereich
- 3: Zwischenschicht
- 4: Grundschicht
- 5: Deckschicht

## Patentansprüche

1. Lagerbauteil mit einem Oberflächenbereich (2), auf den übereinander eine Grundschicht (3) eines ersten Lacks auf Polyurethan-Basis, dem Zink zugesetzt ist, eine von der Grundschicht (3) verschiedene Zwischenschicht (4) eines zweiten Lacks auf Polyurethan-Basis, dem Fasern zugesetzt sind und eine von der Zwischenschicht (4) verschiedene Deckschicht (5) eines dritten Lacks auf Polyurethan-Basis aufgebracht sind.

2. Lagerbauteil nach Anspruch 1, wobei der Oberflächenbereich (2) nicht gestrahlt ist.

3. Lagerbauteil nach einem der vorhergehenden Ansprüche, wobei die Fasern eine Länge von 100 bis 400 µm aufweisen.

4. Lagerbauteil nach einem der vorhergehenden Ansprüche, wobei der Faseranteil in der Zwischenschicht (4) 15 bis 35 %.

5. Lagerbauteil nach einem der vorhergehenden Ansprüche, wobei die Fasern eine haftmittelhaltige Schlichte aufweisen.

6. Lagerbauteil nach einem der vorhergehenden Ansprüche, wobei der dritte Lack eine diffusionshemmende Beimischung aufweist.

7. Lagerbauteil nach einem der vorhergehenden Ansprüche, wobei dem dritten Lack Eisenglimmer zugesetzt ist.

8. Lagerbauteil nach einem der vorhergehenden Ansprüche, wobei der erste Lack und der zweite Lack und der dritte Lack hinsichtlich ihrer Polyurethan-Basis identisch ausgebildet sind.

9. Lagerbauteil nach einem der vorhergehenden Ansprüche, wobei der erste Lack und/oder der zweite Lack und/oder der dritte Lack feuchtigkeitshärtend ist.

10. Lagerbauteil nach einem der vorhergehenden Ansprüche, wobei das Lagerbauteil (1) als ein Lagerring ausgebildet ist.

11. Lager mit einem Lagerbauteil (1) nach einem der vorhergehenden Ansprüche.

12. Verfahren zum Schutz eines Lagerbauteils (1) vor Korrosion, wobei auf einen Oberflächenbereich (2) des Lagerbauteils (1) übereinander wenigstens eine Grundschicht (3) eines ersten Lacks auf Polyurethan-Basis, dem Zink zugesetzt ist, eine von der Grundschicht (3) verschiedene Zwischenschicht (4) eines zweiten Lacks auf Polyurethan-Basis, dem Fasern zugesetzt sind und eine von der Zwischenschicht (4) verschiedene Deckschicht (5) eines dritten Lacks auf Polyurethan-Basis aufgetragen werden.

## Claims

1. Bearing component having a surface region (2) to which are applied, one on top of another, a base layer (3) of a first surface coating composition which is based on polyurethane and to which zinc has been added, an intermediate layer (4), different from the base layer (3), of a second surface coating which is based on polyurethane and to which fibres have been added, and a covering layer (5), different from the intermediate layer (4), of a third surface coating which is based on polyurethane.

2. Bearing component according to Claim 1, wherein the surface region (2) is not subjected to abrasive blasting.

3. Bearing component according to either of the preceding claims, wherein the fibres have a length of 100 to 400 µm.

4. Bearing component according to one of the preceding claims, wherein the fibre proportion in the intermediate layer (4) is 15 to 35%.

5. Bearing component according to one of the preceding claims, wherein the fibres comprise an adhesive-containing release agent.

6. Bearing component according to one of the preceding claims, wherein the third surface coating composition comprises a diffusion-inhibiting admixture.

7. Bearing component according to one of the preceding claims, wherein micaceous iron oxide is added to the third surface coating composition.

8. Bearing component according to one of the preceding claims, wherein the first surface coating composition and the second surface coating composition and the third surface coating composition have an identical polyurethane basis.

9. Bearing component according to one of the preceding claims, wherein the first surface coating composition and/or the second surface coating composition and/or the third surface coating composition are/is moisture-curing.

10. Bearing component according to one of the preceding claims, wherein the bearing component (1) is in the form of a bearing ring.

11. Bearing, having a bearing component (1) according to one of the preceding claims.

12. Method for protecting a bearing component (1) against corrosion, wherein applied to a surface region (2) of the bearing component (1), one on top of another, are at least one base layer (3) of a first surface coating composition which is based on polyurethane and to which zinc has been added, an intermediate layer (4), different from the base layer (3), of a second surface coating composition which is based on polyurethane and to which fibres have been added, and a covering layer (5), different from the intermediate layer (4), of a third surface coating composition which is based on polyurethane.

## Revendications

1. Composant de palier muni d'une zone de surface (2), sur laquelle sont appliquées les unes sur les autres une couche de base (3) d'un premier vernis à base de polyuréthane, auquel du zinc est ajouté, une couche intermédiaire (4), différente de la couche de base (3), d'un deuxième vernis à base de polyuréthane, auquel des fibres sont ajoutées, et une couche de recouvrement (5), différente de la couche intermédiaire (4), d'un troisième vernis à base de polyuréthane.

2. Composant de palier selon la revendication 1, dans lequel la zone de surface (2) n'est pas exposée à un jet.

3. Composant de palier selon l'une quelconque des revendications précédentes, dans lequel les fibres présentent une longueur de 100 à 400 µm.

4. Composant de palier selon l'une quelconque des revendications précédentes, dans lequel la proportion de fibres dans la couche intermédiaire (4) est de 15 à 35 %.

5. Composant de palier selon l'une quelconque des revendications précédentes, dans lequel les fibres comprennent un enduit contenant un agent adhésif.

6. Composant de palier selon l'une quelconque des revendications précédentes, dans lequel le troisième vernis comprend un additif inhibant la diffusion.

7. Composant de palier selon l'une quelconque des revendications précédentes, dans lequel du mica de fer est ajouté au troisième vernis.

8. Composant de palier selon l'une quelconque des revendications précédentes, dans lequel le premier vernis et le deuxième vernis et le troisième vernis sont configurés de manière identique au regard de leur base polyuréthane.

9. Composant de palier selon l'une quelconque des revendications précédentes, dans lequel le premier vernis et/ou le deuxième vernis et/ou le troisième vernis durcissent à l'humidité.

10. Composant de palier selon l'une quelconque des revendications précédentes, dans lequel le composant de palier (1) est configuré sous la forme d'une bague de roulement.

11. Palier muni d'un composant de palier (1) selon l'une quelconque des revendications précédentes.

12. Procédé de protection d'un composant de palier (1) de la corrosion, dans lequel au moins une couche de base (3) d'un premier vernis à base de polyuréthane, auquel du zinc est ajouté, une couche intermédiaire (4), différente de la couche de base (3), d'un deuxième vernis à base de polyuréthane, auquel des fibres sont ajoutées, et une couche de recouvrement (5), différente de la couche intermédiaire (4), d'un troisième vernis à base de polyuréthane sont appliquées les unes sur les autres sur une zone de surface (2) du composant de palier (1).
